Europäisches Patentamt

European Patent Office

Office européen des brevets

(19)

(11) Numéro de publication: **0 272 978 B1**

(12) **FASCICULE DE BREVET EUROPEEN**

(45) Date de publication de fascicule du brevet:
**27.11.91**

(51) Int. Cl.⁵: **G05B 19/12**

(21) Numéro de dépôt: **87402868.1**

(22) Date de dépôt: **15.12.87**

(54) **Procédé pour contrôler l'élévation de température de pièces chauffées électriquement.**

(30) Priorité: **23.12.86 FR 8618117**

(43) Date de publication de la demande:
**29.06.88 Bulletin 88/26**

(45) Mention de la délivrance du brevet:
**27.11.91 Bulletin 91/48**

(84) Etats contractants désignés:
**AT BE CH DE ES FR GB GR IT LI LU NL SE**

(56) Documents cités:
**FR-A- 2 555 936
FR-A- 2 572 326
GB-A- 2 119 744
US-A- 3 016 778**

(73) Titulaire: **GAZ DE FRANCE
23, rue Philibert Delorme
F-75017 Paris(FR)**

Titulaire: **MATERIEL INDUSTRIEL JOSEPH
SAURON
14, rue Nollet B.P. 29
F-91200 Athis Mons(FR)**

(72) Inventeur: **Nussbaum, Max
13, allée du Clos Laisnée
F-95120 Ermont(FR)**
Inventeur: **Picart, Thierry
17, rue Vauthier
F-92100 Boulogne sur Seine(FR)**
Inventeur: **Sauron, Jean
44, avenue de Bellevue
F-91210 Draveil(FR)**

(74) Mandataire: **Lerner, François
5, rue Jules Lefèbvre
F-75009 Paris(FR)**

## Description

L'invention a pour objet un procédé pour contrôler, au moyen d'une machine à commande automatique, l'élévation de température de pièces chauffées électriquement.

Le procédé de l'invention est notamment destiné à permettre la réalisation automatique de la soudure entre-elles de pièces en matière plastique.

Si l'on s'intéresse par exemple au domaine de la distribution de gaz, on notera qu'actuellement l'utilisation de plus en plus répandue des tubes en matière plastique (notamment polyéthylène) impliquent certaines contraintes d'assemblage. Ces tubes étant peu aptes au collage, il est généralement nécessaire de les thermosouder. Cependant, il existe aujourd'hui sur le marché plusieurs fabricants de telles pièces destinées à être ainsi assemblées. Pratiquement chaque fabricant a établi ses propres règles pour souder ses pièces dans les meilleures conditions. Aussi, l'utilisateur se trouve confronter à des problèmes de modifications ou d'adaptation des normes de soudage en fonction du type de matériel qu'il utilise.

De façon à autoriser un soudage, ou plus généralement un contrôle de la température des pièces, quel que soit le type de matériel utilisé, il a déjà été proposé, notamment dans la publication FR-A-2 572 326, un procédé dans lequel :

a) on associe à ladite pièce, une carte d'identification pour le contrôle du chauffage, cette carte comprenant plusieurs zones occupant chacune un emplacement distinct,

b) on entre dans ladite carte des données propres à être lues par des moyens de lecture de la machine, ces données comprenant, dans une première partie de zones de ladite carte des données opératoires de commande de la machine au moins relatives à une valeur prédéterminée de la tension et/ou de l'intensité d'alimentation de la résistance de chauffage,

c) une acquisition des données contenues dans la carte est effectuée par des moyens de lecture de cette dernière,

d) on acquiert, par relevé sur ladite pièce, des données complémentaires acceptables par la machine et relatives à l'état physique de cette pièce au début du chauffage, et on fournit ces données à ladite machine

e) une adaptation de la valeur prédéterminée de la tension et/ou de l'intensité d'alimentation de la résistance est alors effectuée par la machine en fonction desdites données complémentaires, pour obtenir une tension et/ou une intensité adaptée(s),

f) et on alimente la résistance électrique avec cette tension et/ou cette intensité adaptée (s), pour chauffer en conséquence ladite pièce.

On peut ainsi effectivement éviter la difficulté inhérente à la tenue à jour d'une liste des pièces disponibles et des spécifications de chaque constructeur, les pièces étant identifiées au niveau de leur utilisation de façon univoque.

Cependant, le procédé et la machine du document FR-A-2 572 326 sont exclusivement destinés à souder entre-elles automatiquement des pièces en matière plastique.

Or, le procédé de l'actuelle invention, qui peut notamment être utilisé à une telle fin en offrant les mêmes avantages, peut également, d'une façon plus générale, permettre de contrôler les paramètres utiles à la vérification de l'échauffement de pièces, en adaptant précisément ces paramètres en fonction des conditions réelles d'utilisation rencontrées.

De façon plus spécifique, le procédé de l'invention se caractérise en ce que :
- lors de l'étape b), on entre dans une seconde partie de zones de la carte, des données complémentaires de correction de la valeur prédéterminée de la tension et/ou de l'intensité d'alimentation de la résistance en fonction de l'état physique réel de ladite pièce au début du chauffage,
- avant d'effectuer l'étape c), on définit une séquence de lecture de la carte et on effectue la lecture de celle-ci en suivant la séquence,
- puis, après avoir effectué l'étape d) et lors de l'étape e), on fait effectuer par la machine une adaptation de ladite valeur prédéterminée de la tension et/ou de l'intensité d'alimentation de la résistance, en fonction non seulement desdites données complémentaires acquises lors de l'étape d), mais également desdites données complémentaires de correction lues sur la carte.

L'avantage du procédé de l'invention apparaîtra plus clairement à l'aide d'un exemple.

Dans le cas de l'application de l'invention au soudage de deux tubes en matière plastique, on prévoit souvent de les assembler au moyen de manchons qui comportent un bobinage électrique sur leur face interne, l'opération de soudage étant réalisée en raccordant le bobinage à une source électrique qui va l'échauffer et provoquer la fusion de la matière plastique du manchon et du tube.

Considérons maintenant le paramètre "résistance R du manchon" (ce paramètre et la valeur qui lui est attribuée par le fabricant étant entrés dans au moins une zone déterminée de la carte).

En pratique, la valeur de ce paramètre est fonction essentiellement de deux critères : la tolérance de fabrication de l'élément résistant du manchon et la variation de sa valeur ohmique qui est liée à la nature du fil résistant et qui est fonction de la température.

En fait, ces deux critères vont affecter la valeur ohmique théorique du manchon placé dans une température ambiante différente de la température moyenne de référence (par exemple 20°C).

Or, la valeur du paramètre "résistance" qui a été exprimée dans la zone correspondante de la carte, correspond à cette valeur ohmique théorique.

De façon à "corriger" la valeur de la résistance à prendre en compte par les moyens de mise en oeuvre du programme de contrôle et de chauffage de la machine, on va définir une tolérance admissible en fonction, dans le cas présent, du cumul des deux critères d'influence précités.

La tolérance définie, entrée également dans une zone déterminée de la carte, par exemple sous une forme correspondant à un pourcentage d'erreurs admissible, va être prise en compte lors du calcul de la comparaison établie entre la valeur théorique de la résistance à 20°C et la valeur réelle de cette résistance dans les conditions effectives de chauffage et de contôle.

On notera que cette valeur réelle peut, pour certains paramètres, être fournie et entrée-dans un étage analogique/logique de la machine par un moyen extérieur à la carte, tel qu'une sonde ou un capteur.

En relation avec cet exemple, le procédé de l'invention prévoit effectivement que :
- lors de l'étape b), on entre dans une troisième partie de zones de la carte des données primaires correspondant à une valeur ohmique prédéterminée attribuée à la résistance électrique de chauffage, et des données de tolérance fixant un écart admissible entre la valeur ohmique prédéterminée attribuée à ladite résistance et sa valeur ohmique réelle au début du chauffage,
- on acquiert, par relevé sur ladite pièce, la valeur ohmique réelle de la résistance de cette pièce au début du chauffage, et on fournit cette valeur à la machine,
- après avoir mené les étapes c) et d) on fait effectuer ensuite par la machine la différence entre la valeur ohmique prédéterminée et la valeur ohmique réelle de ladite résistance,
- et, si cette différence est comprise dans ledit écart admissible, on déclenche les étapes e) et f).

Le procédé de l'invention étant notamment destiné à permettre la soudure contrôlée de deux pièces entre-elles, la description qui suit va, à titre d'exemple non limitatif, faire référence à cette application particulière de l'invention.

Dans le préambule, il a déjà été énoncé que deux éléments, tels que des tubes en polyéthylène, peuvent être réunis au moyen d'un manchon, également en polyéthylène, qui sera thermosoudé à cheval sur les deux extrémités aboutées des deux tubes.

D'une manière classique, les extrémités du bobinage électique du manchon sont accessibles par deux bornes d'alimentation.

Comme il a été décrit dans la demande de brevet français n 84 16691, citée ci-avant, la montée en température convenable à la réalisation d'une bonne soudure des deux tubes et du manchon dépend essentiellement des caractéristiques de ce manchon, et en particulier des paramètres suivants : diamètre du manchon, épaisseur de sa paroi, résistance du bobinage électrique intégré, etc...

Tous ces paramètres qui dictent les conditions d'exécution du programme de soudure, c'est à dire de chauffage et de contrôle de l'élévation de température, fonction essentiellement de la durée et de la puissance du chauffage électrique, sont indiqués sur une plaque ou une carte d'identification attachée ou portée par le manchon. Cette plaque d'identification peut être notamment du type code-barres (alors lisible par crayon optique ou par laser).

Dans la demande française en question, il était prévu un crayon optique relié à un étage de traitement analogique/logique permettant l'introduction dans la machine des données d'identification.

En outre, on prévoyait un moyen extérieur de relevé d'un paramètre supplémentaire. Ce moyen était constitué par une sonde thermique dont le capteur de température déterminait la température effective réelle de la pièce au début de la soudure. La sonde thermique était reliée à la machine de façon à permettre l'introduction de ce paramètre supplémentaire de température dans l'étage de traitement de cette machine.

Les moyens de mise en oeuvre du programme de soudure (et donc de chauffage contrôlé) étaient, quant à eux, constitués par un circuit de programmation déterminant, en fonction des paramètres issus de la carte et de la sonde thermique, les caractéristiques du programme de soudure à appliquer. Ce programme de soudure commandait le réglage d'une source électrique de soudage reliée à l'étage de traitement pour appliquer aux pièces à souder l'énergie électrique requise déterminée.

Bien que le procédé de la présente invention utilise, dans l'application au soudage considéré, la structure générale et les moyens prévus dans la machine objet de la demande antérieure en question, ceux-ci ne seront pas décrits plus avant, ne constituant pas l'objet de la présente invention.

On se reportera toutefois, si nécessaire à cette demande pour de plus amples détails.

Sur la base des moyens qui viennent d'être rappelés, le procédé de l'invention est particulier en ce qu'il prévoit de séparer la carte d'identification jointe à la pièce à chauffer en plusieurs zones distinctes dans certaines au moins desquelles en entre, outre lesdits paramètres utiles à la conduite et au contrôle de ce chauffage, les informations complémentaires relatives à ces paramètres et permettant d'agir sur eux.

Puis, on relève, dans ce cas grâce au crayon optique, les paramètres et/ou les informations qui sont contenues dans les différentes zones, et ce successivement dans un ordre déterminé.

De plus, on prévoit que les informations complémentaires entrées dans la carte réagissent sur les paramètres auxquels elles sont associées en les régulant, c'est-à-dire en les corrigeant.

Dans l'application considérée, on prévoit même qu'au moins un des paramètres entrés (tel que la résistance théorique de la pièce) est considéré comme paramètre de référence et peut être contrôlé sur la base des informations qui lui sont associées dans une zone considérée, et en fonction de la valeur d'un paramètre supplémentaire tel que la résistance ou la température réelle. On fournit alors au moyens de mise en oeuvre du programme de commande de la machine, un paramètre corrigé.

En fait, les paramètres asservis seront constitués par la puissance du chauffage électrique utilisé, l'intensité et la tension délivrées, par le temps de chauffage et par la température théorique et/ou réelle de la pièce à chauffer et à contrôler.

De façon à éclairer la description, on va maintenant présenter, toujours à titre d'exemple, d'une part une structure de carte d'identification pouvant être utilisé, et d'autre part, en liaison avec cette structure, son principe général de fonctionnement.

La carte d'identification envisagée est du type code-barres à 24 caractères. Elle est lisible par crayon optique manuel. Les paramètres contrôlés sont la tension, intensité ou puissance du chauffage électrique délivré, le temps pendant lequel cette tension, intensité ou puissance est délivrée, et la température de la pièce.

Les 24 caractères que comporte la carte d'identification se répartissent en neuf zones principales distinctes. La première zone comprend les huit premiers caractères et permet de définir d'une part les références du fabricant de la pièce et d'autre part, d'entrer des informations complémentaires utiles à la reconnaissance, au contrôle de la pièce et à la sélection du mode de correction des paramètres en fonction des informations contenues dans la carte ou d'un paramètre extérieur (tel que la température relevée par la sonde).

La seconde zone comprend trois caractères qui définissent le diamètre de la pièce considérée.

La troisième zone, qui comprend un caractère, définit le type de régulation retenu par le constructeur de la pièce, cette régulation pouvant être effectuée à partir d'un contrôle de tension, d'intensité, ou de puissance.

La valeur de ce caractère détermine également l'unité dans laquelle doit être considérée, par la machine, la valeur théorique d'un paramètre déterminé de la pièce à chauffer (dans ce cas le manchon).

La quatrième zone comprend deux caractères qui permettent de déterminer la valeur nominale de la régulation qui a été définie dans la zone précédente.

La cinquième zone comporte, quant à elle, trois caractères qui peuvent correspondre soit à la valeur moyenne d'un paramètre obtenu en fabrication, soit à une valeur théorique servant à établir une valeur réelle de contrôle et qui sera effectivement utilisée par le programme de la machine de façon à vérifier un paramètre déterminé du manchon. (On reviendra sur ce point ultérieurement).

En résumé, on peut considérer que cette zone définie la valeur de la caractéristique du manchon définie dans la troisième zone, cette caractéristique faisant office de paramètre de référence.

La sixième zone comprend un caractère qui défini un coefficient correcteur. Ce coefficient correcteur, qui constitue donc une information complémentaire entré dans la carte, est destiné à effectuer une "correction" sur la valeur du paramètre inscrit en zone 5, et ce en fonction soit d'un paramètre supplémentaire calculé par une unité de calcul, soit d'un paramètre extérieur fourni dans le cas considéré par la sonde thermique.

La septième zone qui comprend trois caractères définit le temps de chauffage prévu. Dans le cas présent, ce temps est exprimé en secondes ou en minutes.

La huitième zone comprend deux caractères qui définissent la valeur de la correction à apporter sur le temps, la tension ou la puissance de chauffage, en fonction de la température de la pièce (calculée,ou relevée par la sonde thermique).

Enfin, la neuvième zone comprend un seul caractère dont la valeur attribuée constitue comme connue en soi, le chiffre de contrôle ou clé de bonne lecture de la carte.

Il ressort donc de cette première présentation de l'organisation envisagée de la carte, que l'on peut effectuer des procédures de vérifications d'une caractéristique ou paramètre défini de la pièce considérée,soit une correction ou une adaptation à la pièce considérée de l'énergie délivrée par la source électrique utilisée pour porter à température convenable et désirée la pièce.

On va maintenant décrire successivement et plus en détail l'organisation des différentes zones de la carte ainsi que leur principe d'interaction.

ZONE 1

Les huit caractères de cette zone permettent d'exprimer :

1. Les références du fabricant, qui sont representées par 2 caractères numériques.

On notera, que cette référence du fabricant permet de vérifier l'origine des pièces utilisées.

2. Chaque caractère impair premier, troisième, cinquième et septième, permet d'entrer dans la carte une information complémentaire en ajoutant au caractère considéré une valeur arbitraire déterminée, qui a été choisie égale à 0, 3 ou 6.

Dans le cas présent :

- le premier caractère définit le type de pièces utilisées (manchon, tube...)
- le troisième caractère définit le paramètre à corriger (par exemple la durée de chauffage ou puissance délivrée par la source électrique) en fonction d'un autre paramètre (notamment température de la pièce fournie par la sonde).
- le cinquième caractère définit la nature du cycle de soudage. Il peut également fournir une information complémentaire susceptible d'agir sur un paramètre déterminé (voir cas du dix-huitième caractère, zone six).

Le septième caractère définit la plage de température prévue par le constructeur.

EXEMPLE

Premier caractère

Valeur de l'information ajoutée au caractère codé numérique considéré
0 = Prise ou selle
3 = Manchon ou emboiture
6 = accessoire électro-chauffant autre qu'électro-soudable.

Troisième caractère

Valeur de l'information ajoutée
0 = U (tension) ou I (intensité) régulés avec une correction de temps
3 = U ou I régulé avec une correction de puissance
6 = Régulation de puissance.

Cinquième caractère

Valeur de l'information ajoutée
0 = Cycle de soudage uniforme
$\begin{matrix} 3 = \\ 6 = \end{matrix}$ } autre cycle

Septième caractère

Valeur de l'information ajoutée
0 = première plage de température autorisée par le fabricant de la pièce.
3 = seconde plage de température
6 = troisième plage de température

On peut donc entrer dans la première zone du code-barres une information supplémentaire avec trois possibilités.

EXEMPLE

Fabricant LINO GAZ

Logo contracte LINO
Sous leur forme codée ces lettres ont pour valeur
L = 12 I = 09 N = 14 O = 15
Si les 8 caractères assemblés de cette première zone forment 12391465 alors on aura entré :
- l'information "prise ou selle" au niveau du premier caractère (ajout de la valeur "0" à ce premier caractère,
- l'information "U ou I régulée avec une correction de puissance" (au niveau du troisième caractère ajout de "3").
- l'information "cycle de soudage uniforme" au nivau du septième caractère (ajout de "6" à ce septième caractère).

ZONE DEUX

La deuxième zone concerne les caratères 9, 10 et 11.

Ces caractères définissent le diamètre de la pièce considérée. Le diamètre inscrit correspond, dans le cas d'un manchon, au diamètre extérieur du tube sur lequel il doit être adapté.

Deux plages échelonnées ont été définies.

1. Le diamètre de la pièce est exprimé en millimètres.

Les chiffres utilisables sont : 001 à 799.

. le caractère n. 9 indique la centaine de mm

. le caractère n. 10 indique la dizaine de mm

. le caractère n. 11 indique l'unité de mm.

EXEMPLE : ∅ 20 mm = 020, ∅ 110 mm = 110

2. Le diamètre de la pièce est exprimé en pouce.

Dans ce cas les chiffres utilisables sont : 800 à 999

. le caractère n. 9 indique la dizaine de pouce

. le caractère n. 10 indique l'unité de pouce

. le caractère n. 11 indique la fraction de pouce

Selon le code :

0 = entier de pouce

1 = 1/4 de pouce

2 = 3/8 de pouce

3 = 1/2 pouce

4 = 3/4 de pouce

EXEMPLE : ∅ 1″ = 810, ∅ 1″1/4 = 811

On notera que la valeur 000 peut être utilisée pour les accessoires dont le diamètre ne peut pas être défini.

ZONE 3

Le caractère contenu dans cette zone 3 :

1. permet de définir en fonction de la valeur de l'information ajoutée au troisième caractère de la zone 1 le mode de régulation (tension, intensité...). La valeur donnée au mode de régulation choisi est inscrite en zone 4. Cette valeur peut également être calculée au niveau d'une unité de calcul (voir zone 6).

En mode U : contrôle de la tension Volt par Volt

En mode I : contrôle de l'intensité Ampère par Ampère

En mode P : contrôle de la puissance à partir du paramètre

U pour le calcul de la puissance par la formule $U^2/R$

I pour le calcul de la puissance par la formule $RI^2$

2. d'indiquer la position de la virgule dans la valeur nominale du paramètre caractéristique de la pièce à chauffer.

Dans ce cas, ce paramètre caratéristique correspond à la résistance de la pièce (R).

EXEMPLE

| U | | | I | | |
|---|---|---|---|---|---|
| 1 | : | $\Omega$ | 4 | : | $\Omega$ |
| 2 | : | , $\Omega$ | 5 | : | , $\Omega$ |
| 3 | : | , $\Omega$ | 6 | : | , . $\Omega$ |

Après avoir lu ce caractère, on a donc connaissance d'une part du mode de régulation de l'alimentation électrique choisie et d'autre part de l'unité ($\Omega$, dixième d'$\Omega$ au centième d'$\Omega$) du paramètre caractéristique selectionné.

ZONE 4

Suivant le mode U, I ou P... exprimé dans le caractère 12 (zone 3 précédente), les caractères 13-14 de cette zone 4 précisent la valeur du paramètre de régulation choisi.

MODE U

Les chiffres entrés dans ces caractères 13 et 14 expriment en clair la valeur de la tension efficace nominale choisie et maintenue constante pendant le temps de chauffage aux bornes d'entrée du bobinage du manchon.

EXEMPLE : 35 Volts

Caractère 13 = 3
Caractère 14 = 5

MODE I

Les valeurs attribuées aux caractères 13 et 14 expriment alors en clair la valeur de l'intensité choisie et maintenue constante pendant le temps de chauffage.

EXEMPLE : 4 Ampères

Caractère 13 = 0
Caractère 14 = 4
Comme on l'a compris, les unités choisies sont, dans ce cas, le Volt pour U et l'Ampère pour I.
Le paramètre puissance (P, en Watt) pourrait de la même façon être retenu.

ZONE 5

La zone 5 comprend trois caractères 15 16 17 dans lesquels on entre une information relative au paramètre caractéristique de la pièce sélectionné au niveau du caractère 12 (zone 3).
Dans le cas où le paramètre caractéristique est la résistance la pièce, les trois chiffres entrés respectivement dans les caractères 15, 16 et 17 indiquent la valeur de référence de ce paramètre caractéristique.
On a choisi arbitrairement que ce nombre à trois chiffres traduirait la valeur de la résistance de la pièce (manchon) à une température moyenne de 20°C.

EP 0 272 978 B1

EXEMPLE

Caractère 12 = 1
Caractère 15-16-17 = 300
On en déduit que R = 300 Ω (ohm)

L'information entrée dans cette zone 5 peut notamment correspondre à la valeur moyenne d'un paramètre obtenu généralement en fabrication ou encore à une valeur théorique servant à établir, comme on le verra ci-après, une valeur "de contrôle" utilisée pour vérifier un paramètre de la pièce.

On notera que si le nombre 000 est entré dans cette zone, cela indique que le paramètre caractéristique R n'est pas pris en compte.

ZONE 6

Dans cette zone 6, qui est constituée par le dix-huitième caractère du code-barres, on entre une information relative au paramètre caractéristique dont la valeur a été fixée aux quinzième, seizième et dix-septième caractères (zone 5).

La valeur chiffrée qui est attribuée au caractère 18 permet d'accorder une marge d'erreurs ou une tolérance d'écart que les moyens de programmation ou de commande de la machine peuvent admettre entre la valeur théorique du paramètre caractéristique entré à l'origine dans la carte et sa valeur "réelle" déterminée soit à partir du relevé de température de la pièce par la sonde thermique, soit par son calcul interne commandé, au niveau d'une unité de calcul (voir NOTA).

Dans notre exemple, le paramètre caractéristique étant R (résistance de la pièce ou manchon), le calcul interne de la valeur "réelle" est effectué sur la base d'une comparaison entre la valeur théorique du paramètre R et sa valeur mesurée par un moyen extérieur (ohmmètre notamment).

Si l'écart entre la valeur réelle et la valeur théorique du paramètre considéré est compris dans l'information "tolérance admissible" du caractère 18, alors les moyens de programmation de la machine ne tiennent pas compte de cet écart et travaillent sur la base de la valeur théorique fournie lors de la lecture de la zone.

Par contre, si la tolérance admissible est dépasse, on arrête l'opération de soudage.

EXEMPLE

Chiffres et pourcentages correspondants exprimés au niveau de ce dix-huitième caractère.
1 = ± 6 %
2 = ± 8 %
3 = ± 10 %...
9 = voir nota
0 = non pris en compte

Les pourcentages sont établis de façon à tenir compte des variations de la résistance en fonction de la température "de chantier".

NOTA : cas du chiffre 9

Dans ce cas la mesure directe de la température réelle de la pièce par un moyen extérieur (sonde thermique) est supprimé et remplacé par le calcul, en machine, de cette température par comparaison de la valeur théorique de la résistance inscrite dans la zone 5 (en relation avec la zone 3) à 20° C, et de sa valeur réelle mesurée, par exemple par un ohmmètre, à la température de la pièce. On détermine donc indirectement le paramètre de température.

ZONE 7

La zone 7 comprend 3 caractère n°. 19, 20 et 21.
Les valeurs attribuées à ces caractères expriment le temps de chauffage de la pièce.
Le temps peut être exprimé en secondes. On utilisera alors par exemple les chiffres allant de 003 à 899. Les caractères 19, 20 et 21 expriment respectivement les centaines, les dizaines, et les unités de secondes.
Le temps peut également être exprimé en minutes. On utilisera alors des chiffres allant de 900 à 999. Le 9 du caractère 19 n'est alors plus significatif. Les caractères 20 et 21 expriment respectivement les

8

dizaines et les unités de minutes.

On peut prévoir que pour une valeur déterminée, par exemple 000, le temps de chauffage (ou de soudage) n'est pas prédéfini dans le code-barres. L'arrêt de l'opération de soudage en cours pourra être alors commandé par un capteur extérieur qui interrompra le fonctionnement de la machine au moment où l'on aura atteint la température désirée.

ZONE 8

Les caractères 22 et 23 de la carte code-barres constituent la zone 8.

Cette zone est destinée à corriger l'énergie délivrée par la source électrique.

Dans le cas envisagé, les paramètres corrigés sont le temps ou la puissance de chauffage, cette correction étant établie en fonction de la température calculée de la pièce ou relevée par la sonde thermique.

En corrigeant ainsi l'énergie initiale délivrée, on maintient au meilleur niveau la qualité du soudage quelles que soient les conditions météorologiques rencontrées.

En pratique :

. Si la sonde relève une température de 20°C environ, une correction sera alors nulle

. au dessous de 20°C, on admet que l'on fixe, par degré C, un pourcentage de corrections positives du paramètre temps ou puissance.

. au dessus de 20°C, on admet que l'on fixe, toujours par degré C, un pourcentage de corrections négatives du paramètre initial.

On rappellera que le paramètre temps ou puissance à corriger a été selectionné lors de l'attribution de la valeur du troisième caractère (zone 1).

EXEMPLES

1. Caractère 22 : chiffre 2 à 9

Caractère 23 : chiffre 2 à 9

On considère que les informations chiffrées contenues dans ces caractères et qui sont relatives soit au temps soit à la puissance de chauffage, expriment une correction en dixième de pourcentage par degré C.

2. Caractère 22 = 0

Caractère 23 = 0

L'information "00" exprime qu'il n'y a aucune correction de temps ou de puissance à prendre en compte. En conséquence transformation nulle de ces paramètres.

Un relevé de température par la sonde thermique n'est alors pas nécessaire.

3. Caractère 22 = 1

Caractère 23 = 1

L'information "11" indique également à la machine qu'aucune régulation de temps ou de puissance n'est à prévoir. Donc là encore, transformation ou modification nulle de ces paramètres.

On ne prévoit pas non plus dans ce cas de relevés ou de calcul de température.

ZONE 9

La zone 9 comprend le vingt-quatrième et dernier caractère du code-barre.

Ce vingt-quatrième caractère indique que le message a été lu par le crayon optique en totalité et est reconnu comme significatif.

La procédure de contrôle étant en soi connue et ne constituant pas l'objet de l'invention, elle ne sera pas décrite.

De l'exemple qui précède on peut donc déduire que le procédé de l'invention permet suivant les informations complémentaires entrées dans les zones correspondantes du code-barre :

- soit de définir le type ou le mode de régulation (U, I, ou éventuellement P, ou autres...) de l'énergie de chauffage (soudage) délivrée par la source électrique,

- soit de contrôler la valeur de référence qui a été choisie (voir l'exemple considéré ci-avant où il s'agit de la résistance R du manchon).

Le procédé de l'invention peut donc, d'une façon synthétique, se définir comme suit :

. DEFINITION DE LA REGULATION

| Caractère | | Mode d'action |

```
Caractère                                          Mode d'action

  12      → définit le mode de            définit la tension ou
            regulation                    l'intensité du soudage ──────────►
  13   }                                  (ou éventuellement
  14   } → valeur nominale ⩽ 99           puissance soudage
                                                                   Puissance
  12      → décimale                      Valeur de R (1) à la tempé-   initiale
  15   }    chiffres          valeur      rature T' réelle
  16   }    significatifs     exacte de R (de chantier) en fonction
  17   }                      (à 20°C)    des informations entrées
                                          dans le caractère 3
  22 et 23 → correction de la tempéra-                                  ENER:
             ture (T°)                                                   DE
   3      → type de correction                                         SOUD:

  19   }    temps de soudage en           temps de soudage
  20   }    mn ou en s (à 20°C)           corrigé en fonction
  21   }                                  de la température
                                          réelle (du chantier) et des
  22      → coefficient correction        informations entrées dans le caractère 3
            pour T° ⩽ 20
  23      → coefficient correction
            pour T° ⩾ 20
   3      → type de correction
```

. CONTROLE DE LA VALEUR DE REFERENCE

```
  12      → décimale
  15   }    chiffres            valeur nominale de R (à 20° C)   Valeur théorique du
  16   }    significatifs                                        paramètres caractéristique (R
  17   }                                                         à la température
  18      → correction de la valeur nominale                    du chantier
```

NOTA : on a considéré arbitrairement que la température (T°) nominale de
référence était égale à 20° C.

(1) R = Paramètre caractéristique "résistance de la pièce" considéré

## Revendications

1. Procédé pour contrôler, au moyen d'une machine à commande automatique, l'évolution en température d'une pièce pourvue d'une résistance électrique propre à assurer le chauffage de cette pièce, dans lequel procédé :

a) on associe à ladite pièce, une carte d'identification pour le contrôle du chauffage, cette carte comprenant plusieurs zones occupant chacune un emplacement distinct,

b) on entre dans ladite carte des données propres à être lues par des moyens de lecture de la machine, ces données comprenant, dans une première partie de zones de ladite carte (zones 1, 2, 3, 4, 9), des données opératoires de commande de la machine au moins relatives à une valeur prédéterminée de la tension et/ou de l'intensité d'alimentation de la résistance de chauffage,

c) une acquisition des données contenues dans la carte est effectuée par les moyens de lecture de cette dernière,

d) on acquiert, par relevé sur ladite pièce, des données complémentaires acceptables par la machine et relatives à l'état physique de cette pièce au début du chauffage, et on fournit ces données à ladite machine,

e) une adaptation de la valeur prédéterminée de la tension et/ou de l'intensité d'alimentation de la résistance est alors effectuée par la machine en fonction desdites données complémentaires, pour obtenir une tension et/ou une intensité adaptée(s),

f) et on alimente la résistance électrique avec cette tension et/ou cette intensité adaptée(s), pour chauffer en conséquence ladite pièce,

ce procédé étant caractérisé en ce que :

- lors de l'étape b), on entre dans une seconde partie de zones de la carte (zone 8), des données complémentaires de correction de la valeur prédéterminée de la tension et/ou de l'intensité d'alimentation de la résistance en fonction de l'état physique réel de ladite pièce au début du chauffage,

- avant d'effectuer l'étape c), on définit une séquence de lecture de la carte et on effectue la lecture de celle-ci en suivant la séquence,

- puis, après avoir effectué l'étape d) et lors de l'étape e), on fait effectuer par la machine une adaptation de ladite valeur prédéterminée de la tension et/ou de l'intensité d'alimentation de la résistance, en fonction non seulement desdites données complémentaires acquises lors de l'étape d), mais également desdites données complémentaires de correction lues sur la carte.

2. Procédé selon la revendication 1 caractérisé en ce que les données opératoires et les donnés complémentaires de correction entrées dans la carte lors de l'étape b) sont également relatives à une valeur prédéterminée de la durée pendant laquelle la résistance électrique est à alimenter avec ladite valeur prédéterminée de tension et/ou d'intensité, (zone 7, zone 8).

3. Procédé selon la revendication 2 caractérisé en ce que :

- lors de l'étape e) une adaptation du temps prédéterminé d'alimentation de la résistance est également effectuée par la machine en fonction d'une part desdites données complémentaires acquises lors de l'étape d), et d'autre part desdites données complémentaires de correction.

- et, lors de l'étape f), la résistance est alimentée avec cette durée adaptée ainsi qu'avec ladite tension et/ou ladite intensité également adaptée(s).

4. Procédé selon l'une quelconque des revendications 1 à 3 caractérisé en ce que :

- lors de l'étape b), on entre dans une troisième partie de zones de la carte (zone 5) des données primaires correspondant à une valeur ohmique prédéterminée attribuée à la résistance électrique de chauffage, et des données de tolérance (zone 6) fixant un écart admissible entre la valeur ohmique prédéterminée attribuée à ladite résistance et sa valeur ohmique réelle au début du chauffage,

- on acquiert, par relevé sur ladite pièce, la valeur ohmique réelle de la résistance de cette pièce au début du chauffage, et on fournit cette valeur à la machine,

- après avoir mené les étapes c) et d) on fait effectuer ensuite par la machine la différence entre la valeur ohmique prédéterminée et la valeur ohmique réelle de ladite résistance,

- et, si cette différence est comprise dans ledit écart admissible, on déclenche les étapes e) et f).

5. Procédé selon l'une quelconque des revendications 1 à 4 caractérisé en ce que lors de l'étape d), les données complémentaires relevées sur ladite pièce à chauffer sont relatives à la température réelle de cette dernière au début du chauffage.

6. Procédé selon la revendication 4 caractérisé en ce que lors de l'étape d) les données complémentaires relevées sur ladite pièce à chauffer sont relatives à la valeur ohmique réelle de la résistance électrique au début du chauffage

7. Application du procédé selon l'une quelconque des revendications précédentes au soudage de deux pièces en matières plastiques compatibles, l'une de ces pièces étant pourvue de ladite résistance électrique laquelle est propre à être alimentée en tension et/ou en intensité pour assurer le chauffage des deux pièces en vue de leur soudage mutuel.

## Claims

1. Process for controlling, by means of an automatically controlled machine, the temperature development of a part provided with an electrical resistor suitable for heating this part, in which process:

a) an identification card for controlling the heating is connected to the said part, this card comprising a plurality of zones each of which occupies a distinct place;

b) data which can be read by the reading means of the machine are entered into the said card, these data comprising, in a first part of the zones of the said card (zones 1, 2, 3, 4, 9), operational data for controlling the machine which relate at least to a predetermined value of the supply voltage and/or intensity of the heating resistor;

c) the data in the card is acquired constantly by the means for reading the latter;

d) complementary data which the machine can accept and which relate to the physical state of this part at the start of the heating process are acquired by reading from the said part, and these data are input into the said machine;

e) the predetermined value of the supply voltage and/or intensity of the resistor is then adapted by the machine as a function of the said complementary data, to obtain a suitable voltage and/or intensity;

f) and the electric resistor is supplied with this adapted voltage and/or intensity, to heat the said part as a result, this process being characterised in that:

during stage b) there are entered in a second part of the zones of the card (zone 8), complementary data for correcting the predetermined value of the supply voltage and/or intensity of the resistor as a function of the actual physical state of the said part at the start of the heating process;

- before stage c) is carried out, a reading sequence of the card is defined and it is read according to the sequence;

- subsequently, after stage d) has been carried out and during stage e), the machine adapts the said predetermined value of the supply voltage and/or intensity of the resistor, as a function not only of the said complementary data acquired during stage d) but also as a function of the said complementary correcting data read from the card.

2. Process according to Claim 1, characterised in that the operating data and the complementary correcting data entered into the card during stage b) also relate to a predetermined value of the time span during which the electrical resistor is to be supplied with the said predetermined voltage and/or intensity value (zone 7, zone 8).

3. Process according to Claim 2, characterised in that;
- during stage e) the predetermined time for supplying the resistor is also adapted by the machine as a function on the one hand of the said complementary data acquired during stage d), and on the other hand, of the said complementary correcting data;
- and, during stage f), the resistor is supplied with this adapted time span as well as with the said voltage and/or intensity which is/are also adapted.

4. Process according to any one of Claims 1 to 3; characterised in that;
- during stage b), primary data corresponding to a predetermined ohmic value attributed to the electrical heating resistor and tolerance data (zone 6) which determine a permitted tolerance between the predetermined ohmic value attributed to the said resistor and the actual ohmic value thereof at the start of the heating process are entered into a third part of the zones of the card (zone 5);
- the actual ohmic value of the resistance of this part at the start of the heating process is acquired by reading from the said part and this value is supplied to the machine;
- when stages c) and d) have been completed; the difference between the predetermined ohmic value and the actual ohmic value of the said resistance is calculated;
- and if this difference is within the said permitted tolerance, stages e) and f) are triggered.

5. Process according to any one of Claims 1 to 4, characterised in that, during stage d) the complementary data that have been read from the said part to be heated relate to the actual temperature of the latter at the start of the heating process.

6. Process according to Claim 4, characterised in that during stage d) the complementary data that have been read from the said part to be heated relate to the actual ohmic value of the electric resistance at the start of the heating process.

7. Application of the process according to any one of the preceding claims to the welding of two parts of

EP 0 272 978 B1

compatible plastics materials, one of these parts being provided with the said electrical resistor which can be supplied with voltage and/or intensity to heat the two parts with the object of soldering them together.

## Patentansprüche

1. Verfahren zum Steuern der Temperaturentwicklung eines Teiles mittels einer Maschine mit automatischer Steuerung, wobei das Teil mit einem elektrischen Widerstand versehen ist, der geeignet ist, das Erwärmen dieses Teiles sicherzustellen, wobei:

   a) man dem Teil eine Identifikationskarte zuordnet zur Steuerung des Erwärmens, wobei diese Karte mehrere Zonen aufweist, welche jede einen anderen Platz einnimmt,

   b) man in diese Karte Daten eingibt, die geeignet sind, durch Lesemittel der Maschine gelesen zu werden, wobei diese Daten in einem ersten Teil der Zonen dieser Karte (Zonen 1, 2, 3, 4, 9) Funktionsdaten aufweisen für die Steuerung der Maschine mindestens relativ zu einem vorbestimmten Wert der Spannung und/oder des Versorgungsgrades des Heizwiderstandes,

   c) eine Erfassung der in der Karte enthaltenen Daten durch Lesemittel für die Karte erfolgt,

   d) man durch Ablesen auf dem Teil zusätzliche Daten erlangt, die durch die Maschine annehmbar sind und dem physikalischen Zustand dieses Teils zu Anfang der Erwärmung entsprechen, und man diese Daten der Maschine liefert,

   e) eine Anpassung des vorbestimmten Wertes der Spannung und/oder des Versorgungsgrades des Widerstandes dann durch die Maschine in Funktion der gegebenen zusätzlichen Daten erfolgt, um eine geeignete Spannung und/oder Strom zu erhalten,

   f) und man den elektrischen Widerstand mit dieser geeigneten Spannung und/oder dieses geeigneten Stromes versorgt, um folglich dieses Teil zu erwärmen, wobei dieses Verfahren dadurch gekennzeichnet ist, daß:

   - man während des Schrittes b) in einen zweiten Teil der Kartenzonen (Zone 8) zusätzliche Daten der Korrektur für den vorbestimmten Wert der Spannung und/oder des Versorgungsstromes des Widerstandes in Funktion des tatsächlichen physikalischen Zustandes des Teiles zu Anfang der Erwärmung eingibt,

   - man vor der Ausführung des Schrittes c) eine Lesesequenz der Karte definiert und man das Lesen dieser durchführt, indem man der Sequenz folgt,

   - man dann nach durchgeführtem Schritt d) und während des Schrittes e) durch die Maschine eine Anpassung des vorbestimmten Wertes der Spannung und/oder des Versorgungsstromes des Widerstandes in Funktion nicht nur der gegebenen zusätzlichen Daten, die während des Schrittes d) erhalten wurden, sondern auch der zusätzlichen, auf der Karte gelesenen Korrekturdaten erfolgen läßt.

2. Verfahren nach Anspruch 1, dadurch gekennzeichnet, daß die Funktionsdaten und die zusätzlichen, in die Karte während des Schrittes b) eingegebenen Korrekturdaten ebenfalls relativ einem vorgegebenen Wert der Dauer sind, während welcher der elektrische Widerstand mit dem vorbestimmten Wert der Spannung und/oder des Stromes, (Zone 7, Zone 8) zu versorgen ist.

3. Verfahren nach Anspruch 2, dadurch gekennzeichnet, daß:
   - während des Schrittes e) eine Anpassung der vorbestimmten Versorgungszeit des Widerstandes ebenfalls durch die Maschine in Funktion einerseits der während des Schrittes d) erhaltenen, zusätzlichen Daten erfolgt und andererseits in Funktion der zusätzlichen Korrekturdaten erfolgt
   - und während des Schrittes f) der Widerstand mit dieser angepaßten Dauer so wie mit der ebenfalls angepaßten Spannung und/oder des ebenfalls angepaßten Stromes versorgt wird.

4. Verfahren nach einem der Ansprüche 1 bis 3, dadurch gekennzeichnet, daß:
   - man während des Schrittes b) in einen dritten Teil der Zonen der Karte (Zone 5) primäre Daten eingibt, welche einem vorbestimmten Ohm'schen Wert entsprechen, der dem elektrischen Heizwiderstand zugeordnet ist, und Toleranzdaten (Zone 6) eingibt, die einen zulässigen Abstand zwischen dem vorbestimmten Ohm'schen Wert, welcher dem Widerstand zugeordnet ist, und seinem tatsächlichen Ohm'schen Wert am Anfang des Erwärmens festlegen,
   - man durch Ablesen auf diesem Teil den tatsächlichen Ohm'schen Wert des Widerstandes dieses Teils zu Anfang der Erwärmung erhält und man diesen Wert der Maschine liefert,
   - man nach dem Durchlaufen der Schritte c) und d) dann durch die Maschine die Differenz

13

zwischen dem vorbestimmten Ohm'schen Wert und dem tatsächlichen Ohm'schen Wert dieses Widerstandes bilden läßt,
- und man, wenn diese Differenz in dem zulässigen Abstand liegt, die Schritte e) und f) auslöst.

5. Verfahren nach einem der Ansprüche 1 bis 4, dadurch gekennzeichnet, daß während des Schrittes d) die zusätzlichen Daten, die auf diesem zu erwärmenden Teil abgelesen sind, sich auf die tatsächliche Temperatur des letzteren zu Beginn der Erwärmung beziehen.

6. Verfahren nach Anspruch 4, dadurch gekennzeichnet, daß während des Schrittes d) die zusätzlichen Daten, die auf dem zu erwärmenden Teil abgelesen werden, sich auf den tatsächlichen Ohm'schen Wert des elektrischen Widerstandes zu Beginn der Erwärmung beziehen.

7. Anwendung des Verfahrens nach einem der vorhergehenden Ansprüche auf das Verschweißen von zwei Teilen aus verträglichen Plastikmaterialien, wobei eines dieser Teile mit dem elektrischen Widerstand versehen ist, der geeignet ist, mit Spannung und/oder Strom versorgt zu werden, um die Erwärmung der zwei Teile im Hinblick auf ihre gegenseitige Verschweißung sicherzustellen.